# EUROPEAN PATENT APPLICATION

(11) **EP 2 988 102 A1**
(43) Date of publication of application: **24.02.2016**
(21) Application number: 14783372.7
(22) Date of filing: 04.04.2014
(51) Int. Cl.: G01D 5/245

(54) **MAGNETIC ENCODER AND PRODUCTION METHOD THEREFOR**

(30) Priority: 09.04.2013 JP 2013081086; 31.01.2014 JP 2014016788; 31.01.2014 JP 2014016789
(71) Applicant: NTN Corporation, Osaka-shi, Osaka 550-0003 (JP)
(72) Inventor: HARANO, Takuji, Kameyama-shi, Mie 519-0212 (JP); UEMOTO, Ikuo, Kameyama-shi, Mie 519-0212 (JP); MIYAZAKI, Shinji, Kameyama-shi, Mie 519-0212 (JP); ODA, Takayuki, Kameyama-shi, Mie 519-0212 (JP); NODA, Hiroyuki, Kuwana-shi, Mie 511-8678 (JP)
(74) Representative: Gassner, Wolfgang
(86) International application number: PCT/JP2014/059987
(87) International publication number: WO 2014/168091

(57) **Abstract**

A magnetic encoder is a magnetic encoder including a core metal and a multipolar magnet provided on the core metal and having magnetic poles formed alternately in a circumferential direction. The core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion; the multipolar magnet is integrally molded on an annular portion, of the core metal, extending over the upright plate portion and the outer diameter cylindrical portion, by insert-molding such that an end surface of the outer diameter cylindrical portion is embedded; and a gap between the core metal and the multipolar magnet is filled with a sealing agent.

## Description

### CROSS REFERENCE TO THE RELATED APPLICATION

This application is based on and claims Convention priority to Japanese patent application No. 2013-081086, filed April 9, 2013, Japanese patent application No. 2014-016788, filed January 31, 2014, and Japanese patent application No. 2014-016789, filed January 31, 2014, the entire disclosures of which are herein incorporated by reference as a part of this application.

### BACKGROUND OF THE INVENTION

### (Field of the Invention)

The present invention relates to a magnetic encoder which is mounted to a bearing or the like and functions for rotation speed detection, and a production method therefor.

### (Description of Related Art)

A magnetic encoder is incorporated into, for example, a wheel bearing device of a vehicle and is used as a rotation detection device which detects a rotation speed of a wheel at an anti-lock braking system (ABS). This kind of rotation detection devices are roughly classified into a passive type which reads movement of recessed/projected teeth provided on a rotor, as a magnitude of magnetism, and an active type which reads a change in magnitude of magnetism caused with rotation of a magnetic encoder, by a magnetic sensor such as a Hall IC. Among them, the active type rotation detection device is low in cost and is excellent in rotation speed detection in a low-speed range, and thus has tended to be frequently used in recent years.

An active type rotation detection device includes, for example, a magnetic encoder provided on a rotating member and a magnetic sensor provided on a fixed side member. The magnetic encoder includes an annular multipolar magnet which is magnetized in multiple poles in a circumferential direction, and a core metal fixed to the multipolar magnet. As the multipolar magnet, for example, a so-called sintered magnet obtained by compacting and sintering a magnet material including a magnetic powder and a non-magnetic powder, a so-called rubber magnet obtained by injection-molding a magnet material including a magnetic powder and a rubber, and a so-called plastic magnet obtained by injection-molding a magnet material including a magnetic powder and a resin, are publicly known. These multipolar magnets 50 are fixed to core metals 51 by bonding (e.g., see Patent Documents 1 and 2) as shown in Fig. 21, or by means such as caulking (e.g., see Patent Document 3) as shown in Fig. 22.

### [Related Document]

### [Patent Document]

[Patent Document 1] JP Laid-open Patent Publication No. 2003-057070
[Patent Document 2] JP Laid-open Patent Publication No. 2008-233110
[Patent Document 3] JP Laid-open Patent Publication No. 2005-274436

### SUMMARY OF THE INVENTION

A magnetic encoder incorporated into a wheel bearing device has a wide operating temperature range and is used in a severe environment. Thus, it is important to firmly fix the multipolar magnet to the core metal. Patent Document 1 proposes roughing a surface bonded to a multipolar magnet, of the surface of a core metal, to increase the area of contact (bonding), thereby increasing the fixing strength between the core metal and the multipolar magnet. However, an increase in cost caused by performing the surface roughening is unavoidable. In addition, liquid management and an application process of an adhesive themselves are costly work processes.

A method of baking an adhesive whose curing reaction is proceeding, onto the surface of a core metal in a semi-cured state in insert-molding of a plastic magnet as in Patent Document 2 is also proposed. However, an increase in cost caused by performing the baking treatment is also unavoidable in this method. In a configuration in which a plastic magnet and a core metal are integrally molded by insert-molding, after the integral molding, a slight gap (backlash) occurs between the plastic magnet and the core metal due to mold shrinkage of the plastic magnet. There is also a problem in that when the plastic magnet moves even slightly due to the backlash, the magnetic accuracy deteriorates.

Meanwhile, when a multipolar magnet is fixed to a core metal by caulking as in Patent Document 3, an excessive load is applied to the multipolar magnet in the caulking. Thus, special consideration is required for the caulking. A rubber magnet and a plastic magnet can effectively avoid an excessive load in caulking or the like, but in general easily expand or shrink. Therefore, when the inner peripheral surface and the outer peripheral surface of the multipolar magnet are caulked by the core metal as in Patent Document 3, if the multipolar magnet expands, in particular, in a high-temperature environment, there is the possibility that the expansion cannot be released to any of the inner peripheral surface and the outer peripheral surface of the multipolar magnet, so that, for example, the multipolar magnet deforms, leading to a decrease in the accuracy of rotation detection.

The present invention has been made in view of the above-described problems, and an object of the present invention is to provide a magnetic encoder which allows a multipolar magnet and a core metal to be firmly fixed to each other without any gap by a low-cost step enabling a simple treatment in large quantity without applying an excessive load to the multipolar magnet in a production process and which is able to maintain high accuracy of rotation detection over a long period of time, and a production method therefor.

A magnetic encoder in accordance with the present invention is a magnetic encoder including a core metal and a multipolar magnet provided on the core metal and having magnetic poles formed alternately in a circumferential direction. The core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion, and the multipolar magnet is integrally molded on an annular portion, made up of the upright plate portion and the outer diameter cylindrical portion of the core metal, by insert-molding such that an end surface of the outer diameter cylindrical portion is embedded, and a gap between the core metal and the multipolar magnet is filled with a sealing agent.

In the magnetic encoder having this configuration, since the multipolar magnet is integrally molded on the annular portion of the core metal by insert-molding, an excessive load is not applied to the multipolar magnet in a production process, unlike fixing by caulking. Only with the insert-molding, a slight gap occurs between the multipolar magnet and the core metal due to mold shrinkage of the multipolar magnet, so that there is the possibility that the multipolar magnet rattles due to the gap. However, the gap is filled with the sealing agent. Thus, the core metal and the multipolar magnet are firmly fixed to each other to prevent rattle of the multipolar magnet. Thus, it is possible to lessen an adverse effect of stress generated at thermal shock, that is, stress generated due to expansion in a high-temperature environment or shrinkage in a low-temperature environment, on the multipolar magnet. In addition, rattle of the multipolar magnet at the time of shrinkage at a low temperature does not occur. Thus, it is possible to maintain high accuracy of rotation detection over a long period of time. As described above, even without bonding or caulking, it is possible to achieve firm fixation by the method of insert-molding and filling the gap with the sealing agent which method enables a simple treatment in large quantity.

Since the multipolar magnet is molded such that the end surface of the outer diameter cylindrical portion of the core metal is embedded, it is possible to increase the effective radial length of a to-be-detected surface of the multipolar magnet as compared to a magnetic encoder in which the end surface is exposed, so that it is possible to widen a magnetism detection range. The reason why it is possible to make the multipolar magnet have such a cross-sectional shape in which the end surface of the core metal is embedded is that it is not necessary to perform, for example, a process of caulking the outer diameter cylindrical portion of the core metal as in the conventional art.

In the magnetic encoder, since the sealing agent having high flexibility is present in the gap between the core metal and the multipolar magnet, the sealing agent serves as a cushioning material, so that a load of thermal stress to the multipolar magnet is reduced. In general, a multipolar magnet having a magnetic powder highly filled therein, such as a plastic magnet, tends to be inferior in fracture strength due to a small amount of a binder for resin, and thus it is difficult to use such a multipolar magnet in a magnetic encoder. However, the magnetic encoder having this configuration has a low load of thermal stress to the multipolar magnet, and thus it is possible to use, as the multipolar magnet, a plastic magnet having a magnetic powder highly filled therein and having a high magnetic force, or the like.

An operation of filling the gap between the core metal and the multipolar magnet with the sealing agent can be performed, for example, by a simple method in which an integrally molded article composed of the core metal and the multipolar magnet is immersed into a liquid sealing agent to infiltrate the sealing agent into the gap between the core metal and the multipolar magnet, and then drying is performed and the sealing agent is heated to be cured. According to this method, it is possible to efficiently treat many products at one time as compared to a conventional method by bonding, baking, caulking, or the like, and thus the manufacturing cost can be reduced.

In one embodiment of the present invention, the multipolar magnet may be a plastic magnet in which a magnetic powder and a thermoplastic resin are mixed with each other. By using the insert-molding and the sealing treatment in combination as described above, use of a plastic magnet having a magnetic powder highly filled therein and having a high magnetic force is enabled without occurrence of a problem of magnetic accuracy due to a gap. With the plastic magnet, the productivity and the like are excellent. The plastic magnet having the magnetic powder highly filled therein can have a reduced coefficient of linear expansion, and thus it is possible to reduce the difference between the coefficient of linear expansion of the plastic magnet and the coefficient of linear expansion of a metallic material used for the core metal. Although the multipolar magnet expands in a high-temperature environment and shrinks in a low-temperature environment, it is possible to reduce the differences in expansion amount and shrinkage amount between the multipolar magnet and the core metal, since it is possible to reduce the difference between the coefficients of linear expansion of the multipolar magnet and the core metal as described. Therefore, it is possible to prevent the multipolar magnet from deforming due to an excessive load applied thereto when the multipolar magnet expands at a high temperature. In addition, rattle of the multipolar magnet at the time of shrinkage thereof at a low temperature also becomes slight.

In one embodiment of the present invention, a magnetic powder may be mixed in the multipolar magnet and the magnetic powder may include at least strontium ferrite. A ferrite-based magnetic powder is preferable since it exhibits superiority in terms of cost and weather resistance. In particular, strontium ferrite is excellent in these advantages.

The multipolar magnet may include a magnetic powder and a thermoplastic resin mixed with each other, and the thermoplastic resin includes one or more compounds selected from the group consisting of polyamide 12, polyamide 612, polyamide 11, and polyphenylene sulfide. As the thermoplastic resin, in order to suppress a decrease in the magnetic properties of the multipolar magnet due to water absorption as much as possible, one having low water absorbency is desirable. Since the thermoplastic resin includes the one or more compounds, water absorbency of the thermoplastic resin is decreased, so that it is possible to suppress a decrease in the magnetic properties of the multipolar magnet as much as possible. Polyphenylene sulfide is more desirable since it has a lower coefficient of linear expansion than those of the other above processed products so that it is easy to achieve a coefficient of linear expansion equal to that of the core metal.

In one embodiment of the present invention, the sealing agent may suitably include at least one compound selected from the group consisting of acrylate-based compounds, methacrylate-based compounds, and epoxy-based compounds. These sealing agents have higher flexibility than the plastic magnet, and are excellent in cushioning effect, that is, function as the cushioning material. Thus, compressive and tensile stress to the plastic magnet which stress is generated due to temperature change is alleviated and the plastic magnet is not damaged even in a severe temperature environment, so that it is possible to use a plastic magnet material having a magnetic powder highly filled therein and having a high magnetic force.

In one embodiment of the present invention, the outer diameter cylindrical portion may be provided with a staking portion projecting toward an inner diameter side, and the multipolar magnet may be integrally molded on the annular portion of the core metal by the insert-molding such that the staking portion is embedded.

According to this configuration, the staking portion which projects toward the inner diameter side is provided at the outer diameter cylindrical portion of the core metal beforehand, and the multipolar magnet is integrally molded on the annular portion of the core metal provided with the staking portion, by the insert-molding such that the staking portion is embedded. That is, instead of performing staking after the multipolar magnet is insert-molded on the core metal, in a state where the core metal is provided with the staking portion for preventing coming-off and rotation of the multipolar magnet, the multipolar magnet is integrally molded on the core metal by the insert-molding such that the staking portion is embedded.
(1) By staking + insert-molding, the multipolar magnet can be assuredly and easily fixed to the core metal. Only by insert-molding, fixing of the multipolar magnet is insufficient. However, by performing insert-molding such that the staking portions which are provided to the core metal beforehand are embedded, a part of the multipolar magnet is locked by the staking portions, whereby coming-off and rotation of the multipolar magnet can be easily prevented, and the multipolar magnet can be firmly fixed to the core metal. In addition, since the staking is performed, the manufacturing cost can be reduced as compared to the case where conventional surface roughening or baking treatment is performed.
(2) In the case of conventional fixing only by caulking, in order to ensure fixing, it is necessary to perform caulking on both the inner peripheral surface and the outer peripheral surface of the multipolar magnet, and thus it is not possible to release expansion of the multipolar magnet. In the present application, the staking portions which project toward the inner diameter side are provided at the outer diameter cylindrical portion of the core metal along with insert-molding. Thus, the multipolar magnet suffices to be locked only at the outer peripheral surface thereof, and is not locked at the inner peripheral surface thereof. Therefore, even when the multipolar magnet expands in a high-temperature environment, it is possible to release the expansion to the inner diameter side of the multipolar magnet. Accordingly, the multipolar magnet can be prevented from undesirably deforming, so that a decrease in the accuracy of rotation detection can be suppressed.
(3) The staking portions are provided to the core metal beforehand, and the multipolar magnet is insert-molded. Thus, no residual stress occurs in the multipolar magnet, and it is possible to prevent a problem that an excessive load is applied to the multipolar magnet as in caulking.
(4) By the sealing treatment after the insert-molding, the multipolar magnet is further firmly fixed to the core metal.

The multipolar magnet may be a plastic magnet in which a magnetic powder and a thermoplastic resin are mixed with each other, and blending amounts of the magnetic powder and the thermoplastic resin which form the plastic magnet are adjusted such that a difference between a coefficient of linear expansion of the multipolar magnet and a coefficient of linear expansion of the core metal is equal to or less than 2.0×10⁻⁵. In this case, it is possible to use a plastic magnet having a magnetic powder highly filled therein and having a high magnetic force, as compared to a conventional product, so that it is possible to improve a surface magnetic flux density and further contribute to cost reduction.

In one embodiment of the present invention, the multipolar magnet may include a magnetic force reduction suppression section that is formed at a boundary between the magnetic poles S and N adjacent to each other by molding a magnet material, and is configured to suppress a magnetic force reduction due to canceling of magnetic fields between the magnetic poles S and N adjacent to each other.

According to this configuration, since the multipolar magnet includes the magnetic force reduction suppression section which suppresses a magnetic force reduction due to canceling between the magnetic poles S and N adjacent to each other, the above magnetic force reduction due to canceling is suppressed, so that the surface magnetic flux density of the multipolar magnet improves. Thus, high accuracy of rotation detection is obtained without increasing the addition amount of the magnetic powder of the magnet material, the high accuracy of rotation detection is maintained over a long period of time, and a reduction in the material strength of the multipolar magnet is suppressed. Since the magnetic force reduction suppression section is formed by molding the magnet material, the magnetic force reduction suppression section can be easily produced at relatively low cost, unlike the case of adding a magnetic shield member which is another member.

In one embodiment the present invention, the magnetic force reduction suppression section may be in the form of a weld that is formed at the boundary between the magnetic poles S and N adjacent to each other by loading the magnet material through gates at locations corresponding to the respective magnetic poles S and N of the multipolar magnet to mold the multipolar magnet that has not been magnetized. When the magnet material is loaded through the gates at the locations corresponding to the respective magnetic poles S and N, the magnet material loaded through each gate collides against each other at the boundary between a portion that is to be the magnetic pole S and a portion that is to be the magnetic pole N, to form the weld at the boundary. Since the weld is interposed, when the multipolar magnet is magnetized later, a magnetic force reduction due to canceling between the magnetic poles S and N adjacent to each other is suppressed. The weld is a layer-shaped portion which is generated by collision of the magnet material when the magnet material is loaded at the same time.

The magnetic force reduction suppression section may be in the form of a boundary layer that is formed at the boundary between the magnetic poles S and N adjacent to each other by loading the magnet material at a time interval between an S pole portion and an N pole portion at the respective magnetic poles S and N of the multipolar magnet and molding the multipolar magnet that has not been magnetized. The boundary layer is a layer which is generated at the boundary when the magnet material is loaded at a time interval. In this case, types of a magnet material used for molding the S pole portion and a magnet material used for molding the N pole portion may be different from each other. When the magnet materials are loaded at a time interval between the S pole portion and the N pole portion, the boundary layer is formed at the boundary between a magnetic pole portion to which the magnet material is loaded earlier and a magnetic pole portion to which the magnet material is loaded later. Since the boundary layer is interposed, when the multipolar magnet is magnetized later, a magnetic force reduction due to canceling between the magnetic poles S and N adjacent to each other is suppressed. When the types of the magnet material used for molding the S pole portion and the magnet material used for molding the N pole portion may be different from each other, the boundary layer is more clearly defined, so that the effect of suppressing a magnetic force reduction is enhanced.

The magnetic force reduction suppression section may be in the form of a groove that separates a magnetized surface of an S pole portion and a magnetized surface of an N pole portion of the respective magnetic poles S and N of the multipolar magnet. It is possible to form the groove by insert-molding, but in some cases, the groove may be formed by cutting or the like after insert-molding. When the magnetized surfaces of S and N are not formed as the same continuous flat surface but the groove which separates the magnetized surface of the S pole portion and the magnetized surface of the N pole portion is included, it is possible to concentrate lines of magnetic force to improve a surface magnetic flux density, and a magnetic force reduction due to canceling between the magnetic poles S and N adjacent to each other is suppressed.

A production method for a magnetic encoder in accordance with the present invention is a production method for a magnetic encoder including a core metal and a multipolar magnet provided on the core metal and having magnetic poles formed alternately in a circumferential direction, in which the core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion. The production method includes: an insert-molding step of insert-molding the multipolar magnet on an annular portion, made up of the upright plate portion and the outer diameter cylindrical portion of the core metal, such that an end surface of the outer diameter cylindrical portion is embedded; and a sealing treatment step of filling a gap between the core metal and the multipolar magnet with a sealing agent.

The production method for the magnetic encoder in accordance with one embodiment of the present invention may further include a staking step of providing a staking portion projecting toward an inner diameter side, at the outer diameter cylindrical portion prior to the insert-molding step, in which in the insert-molding step, the multipolar magnet is integrally molded by insert-molding such that the staking portion is embedded.

In the production method for the magnetic encoder in accordance with one embodiment of the present invention, when insert-molding a magnet material on the core metal, a weld or a boundary layer that forms a magnetic force reduction suppression section configured to suppress a magnetic force reduction due to canceling of magnetic fields between the magnetic poles S and N adjacent to each other may be formed at a boundary between the magnetic poles S and N adjacent to each other by loading the magnet material to individual portions which are to be the respective magnetic poles S or N.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal cross-sectional view of a magnetic encoder according to a first embodiment of the present invention;
Fig. 2 is a cutaway perspective view of the magnetic encoder;
Fig. 3 is a flowchart schematically showing a production method for the magnetic encoder;
Fig. 4 is an explanatory diagram schematically showing an insert-molding step for the magnetic encoder;
Fig. 5 is an explanatory diagram schematically showing a sealing treatment step for the magnetic encoder;
Fig. 6 is an explanatory diagram showing a specific procedure of the sealing treatment step for the magnetic encoder;
Fig. 7 is a longitudinal cross-sectional view of a main part of a wheel bearing device in which the magnetic encoder is used;
Fig. 8 is a longitudinal cross-sectional view of a magnetic encoder according to a second embodiment of the present invention;
Fig. 9 is a longitudinal cross-sectional view of a core metal of the magnetic encoder;
Fig. 10 is a front view of the core metal;
Fig. 11 is an enlarged view of a main part in Fig. 10;
Fig. 12 is a flowchart schematically showing a production method for the magnetic encoder;
Fig. 13 is an explanatory diagram schematically showing an insert-molding step for the magnetic encoder;
Fig. 14 is an explanatory diagram schematically showing a magnetization step for the magnetic encoder;
Fig. 15 is a longitudinal cross-sectional view of a main part of a wheel bearing device in which the magnetic encoder is used;
Fig. 16 is a cutaway perspective view of a magnetic encoder according to a third embodiment of the present invention;
Fig. 17A shows an example of a method of forming magnetic force reduction suppression section in a multipolar magnet of the magnetic encoder and is an explanatory diagram showing a state in forming the suppression means;
Fig. 17B is similarly an explanatory diagram showing a state where the suppression means is formed;
Fig. 18A shows a different example of the method of forming the magnetic force reduction suppression section in the multipolar magnet of the magnetic encoder and is an explanatory diagram showing a state in forming S pole portions by loading a magnet material for the first time;
Fig. 18B is similarly an explanatory diagram showing a state in forming N pole portions by loading the magnet material for the second time;
Fig. 18C is similarly an explanatory diagram showing a state where boundary layers are formed at boundaries between the S pole portions and the N pole portions;
Fig. 19 shows a perspective view and a partially enlarged view of a multipolar magnet having further different magnetic force reduction suppression section;
Fig. 20 shows a perspective view and a partially enlarged view of a multipolar magnet having further different other magnetic force reduction suppression section;

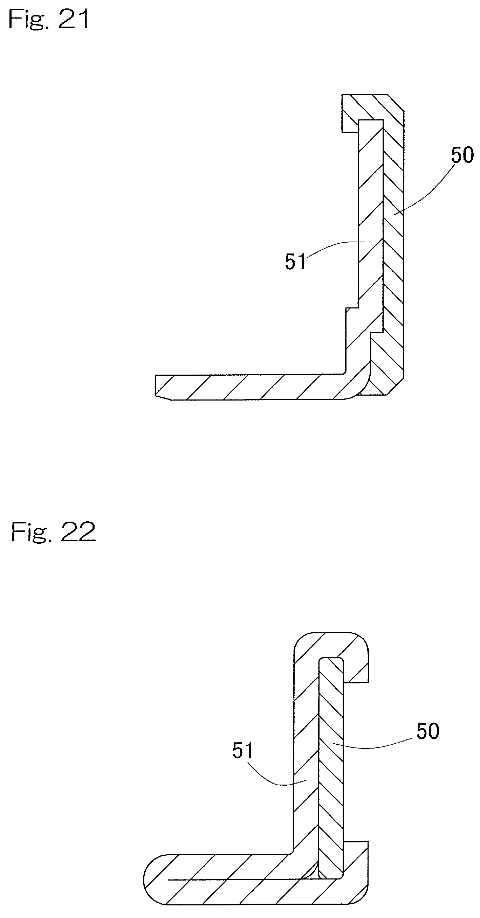

Fig. 21 is a longitudinal cross-sectional view of a magnetic encoder of a conventional art example; and
Fig. 22 is a longitudinal cross-sectional view of a magnetic encoder of another conventional art example.

### DESCRIPTION OF EMBODIMENTS

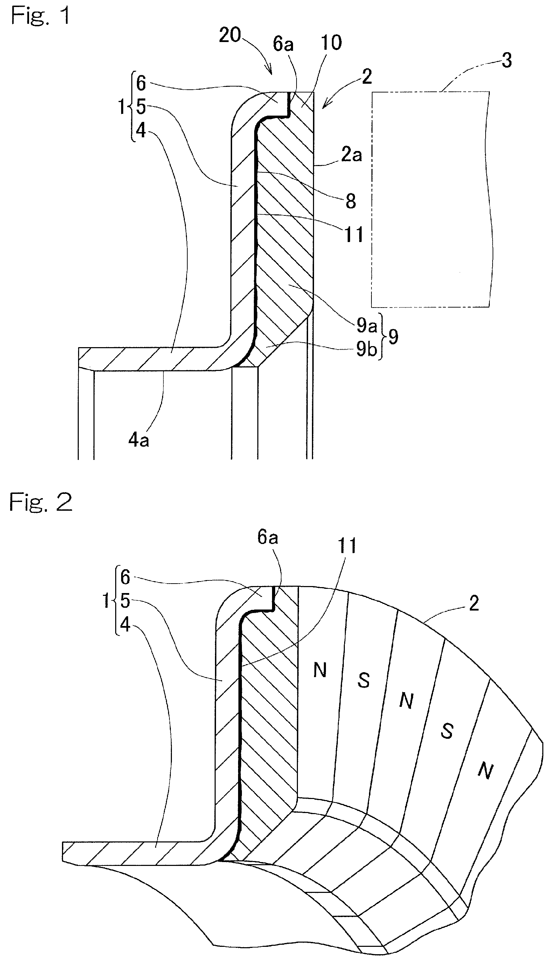

A magnetic encoder according to a first embodiment of the present invention will be described with reference to Figs. 1 to 7. The following description also includes a description of a production method for the magnetic encoder. As shown in Figs. 1 and 2, a magnetic encoder 20 includes an annular core metal 1 and a multipolar magnet 2 provided on the core metal 1. A minute gap defined between the core metal 1 and the multipolar magnet 2 is filled with a sealing agent 11. In the multipolar magnet 2, magnetic poles N and S are formed alternately in a circumferential direction. The magnetic encoder 20 is attached to a rotating member which is not shown, and a magnetic sensor 3 is opposed to the multipolar magnet 2. In this state, the magnetic encoder 20 is used for rotation detection.

The core metal 1 is formed of a metal steel plate of a magnetic material, in particular, a ferromagnetic material, for example, a ferrite-based stainless steel plate (SUS430 which complies with JIS), a cold rolled steel plate (SPCC which complies with JIS), or the like. The core metal 1 includes an inner diameter cylindrical portion 4 fitted to the rotating member, an upright plate portion 5 extending from one end of the inner diameter cylindrical portion 4 toward an outer diameter side, and an outer diameter cylindrical portion 6 extending axially from an outer diameter side end of the upright plate portion 5. The inner diameter cylindrical portion 4 extends from an inner diameter side end of the upright plate portion 5 toward one side in the axial direction, and the outer diameter cylindrical portion 6 extends from the outer diameter side end of the upright plate portion 5 toward the other side in the axial direction. The outer diameter cylindrical portion 6 in this example is formed such that the axial length thereof is shorter than the axial length of the inner diameter cylindrical portion 4.

The multipolar magnet 2 is, for example, in the form of a plastic magnet in which a magnetic powder and a thermoplastic resin are mixed with each other. The multipolar magnet 2 is integrally molded on an annular portion 8, which is made up of the upright plate portion 5 and the outer diameter cylindrical portion 6 of the core metal 1, by insert-molding. A cross-sectional shape of the multipolar magnet 2 includes a body portion 9 located at the magnetic sensor 3 side of the upright plate portion 5 of the core metal 1, and an outer diameter end portion 10 which continues from the outer diameter side of the body portion 9 and covers an end surface of the outer diameter cylindrical portion 6 of the core metal 1. In other words, the end surface 6a of the outer diameter cylindrical portion 6 of the core metal 1 is embedded in the multipolar magnet 2. Since even the end surface 6a of the outer diameter cylindrical portion 6 is embedded in the multipolar magnet 2 as described above, it is possible to suppress a reduction in a magnetism detection range which is caused due to a decrease in the effective diameter of the multipolar magnet 2.

The body portion 9 of the multipolar magnet 2 includes a flat portion 9a whose surface confronts the magnetic sensor 3 and is flush with the outer diameter end portion 10, and an inclined surface portion 9b which continues from the inner diameter side of the flat portion 9a and whose surface is inclined so as to come close to the upright plate portion 5 as extending toward the inner diameter side. The surface of the flat portion 9a of the body portion 9 and the surface of the outer diameter end portion 10 cooperatively form a to-be-detected surface 2a of the multipolar magnet 2. The to-be-detected surface 2a is formed so as to fall within a determined perpendicularity tolerance and a determined radial run-out tolerance with respect to a fitting surface 4a which is a reference surface of the inner diameter cylindrical portion 4.

As the magnetic powder, for example, a publicly known powder, such as an anisotropic or isotropic ferrite-based magnetic powder typified by strontium ferrite and barium ferrite and a rare earth-based magnetic powder typified by neodymium-iron-boron, samarium-cobalt, and samarium-iron-nitrogen, can be used, and they are used solely or used in combination. In the present embodiment, a ferrite-based magnetic powder is mainly used since it exhibits superiority in terms of cost and weather resistance.

As the thermoplastic resin, in order to suppress a decrease in the magnetic properties of the multipolar magnet due to water absorption as much as possible, one having low water absorbency is desirable, and, for example, material including at least one compound selected from the group consisting of polyamide 11 (PA 11), polyamide 12 (PA 12), polyamide 612 (PA 612), and polyphenylene sulfide (PPS) may be used. Polyphenylene sulfide (PPS) is more desirable since it has a lower coefficient of linear expansion than those of the other above processed products so that it is easy to achieve a coefficient of linear expansion equal to that of the core metal.

The blending amounts of the magnetic powder and the thermoplastic resin which form the plastic magnet are adjusted as described below. The blending amounts are adjusted such that the difference between the coefficient of linear expansion of the multipolar magnet 2 and the coefficient of linear expansion of the core metal 1 is equal to or less than 2.0×10⁻⁵. The blending amounts and the difference in coefficient of linear expansion are derived from the test results of a thermal durability test described later.

The sealing agent 11 may be made of, for example, at least one compound selected from the group consisting of acrylate-based compounds, methacrylate-based compounds, and epoxy-based compounds. These compounds are suitable as the sealing agent 11 since they have high flexibility and are excellent in function as a cushioning material.

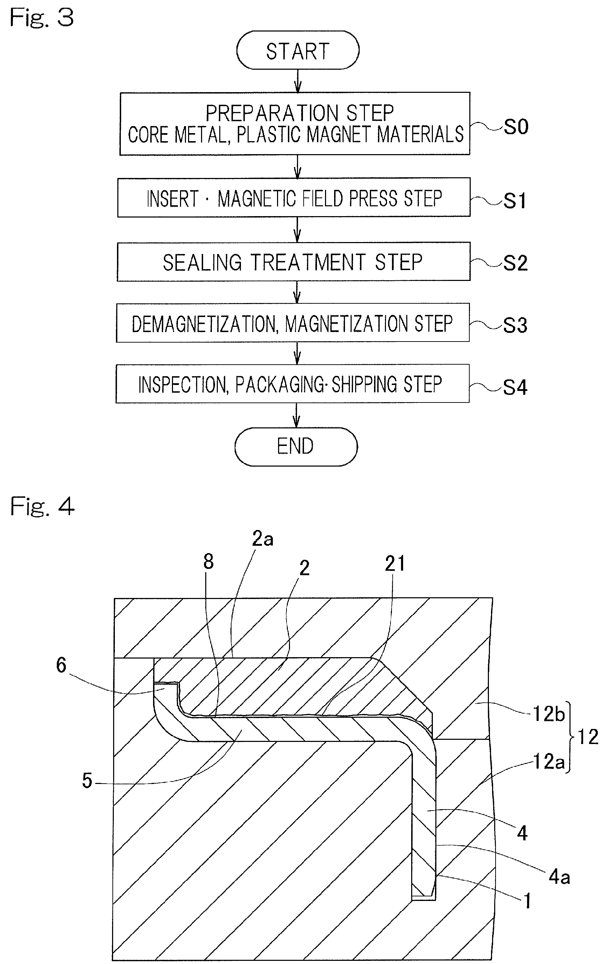

Fig. 3 is a flowchart schematically showing a production method for the magnetic encoder. The production method for the magnetic encoder according to the embodiment includes a preparation step (step S0), an insert molding and magnetic field press step (step S1), a sealing treatment step (step S2), a demagnetization and magnetization step (step S3), and an inspection and packaging·shipping step (step S4).

In the preparation step, the core metal 1 that has been processed into a predetermined shape and the materials of the multipolar magnet 2 (e.g., a magnetic powder and a thermoplastic resin in the case of a plastic magnet) are prepared. In the insert molding and magnetic field press step, as shown in Fig. 4, the core metal 1 is set within a cavity of an injection molding machine 12, and the multipolar magnet 2 is integrally molded on the annular portion 8 of the core metal 1 by insert-molding. After the insert-molding, a slight gap 21 remains between the core metal 1 and the multipolar magnet 2 due to mold shrinkage of the materials. In Fig. 4, the gap 21 is exaggeratedly shown.

In the case where an anisotropic magnetic powder is used for the multipolar magnet 2, simultaneously with the above insert-molding, magnetic field press is performed while magnetic field orientation is conducted. Because of the magnetic field orientation at that time, a unipolar-magnetized state is obtained in which the orientation (easy axis of magnetization) of the magnetic powder is directed in an axial direction, so that it is possible to improve a surface magnetic flux density after magnetization in the demagnetization and magnetization step described later.

The injection molding machine 12 includes, for example, first and second molds 12a and 12b which are used in combination with each other. The first mold 12a holds the core metal 1 while positioning the core metal 1. In a state where the first and second molds 12a and 12b are combined with each other, an annular cavity for molding the multipolar magnet 2 is formed. The injection molding machine 12 is formed with a gate (not shown) through which the materials of the multipolar magnet 2 are loaded into the cavity. After the magnetic field press is performed while the multipolar magnet 2 is integrally molded on the core metal 1, the first and second molds 12a and 12b are opened, and the multipolar magnet 2 and the core metal 1 are taken out therefrom.

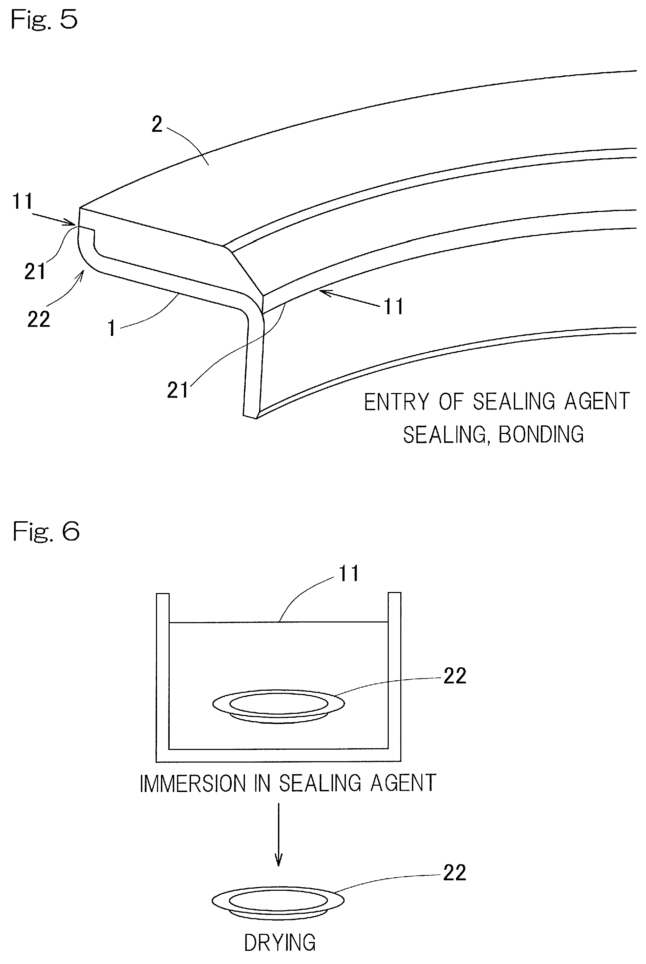

In the sealing treatment step, on an integrally molded article 22 which is composed of the core metal 1 and the multipolar magnet 2 and has been taken out from the injection molding machine 12, a treatment is performed in which the gap 21 which has formed between the core metal 1 and the multipolar magnet 2 during the insert-molding is filled with the sealing agent 11 to bond the core metal 1 and the multipolar magnet 2 to each other as shown in Fig. 5. The method of the treatment is executed, for example, as follows. As shown in Fig. 6, the integrally molded article 22 is put into the sealing agent 11 that is melted, to infiltrate the sealing agent 11 into the gap 21 between the core metal 1 and the multipolar magnet 2, and subsequently, as shown in Fig. 6, the integrally molded article 22 is taken out from the sealing agent 11 and heated to cure the sealing agent 11 within the gap 21.

In the demagnetization and magnetization step, from the integrally molded article 22 which is composed of the core metal 1 and the multipolar magnet 2 and has been subjected to the sealing treatment, residual magnetism at the time of the magnetic field orientation in the insert molding and magnetic field press step is completely eliminated, and the multipolar magnet 2 is magnetized by using a magnetization yoke which satisfies required accuracy. Accordingly, the magnetic encoder 20 is completed. Thereafter, in the inspection and packaging·shipping step, the completed magnetic encoder 20 is inspected, then packaged, and shipped.

Advantageous effects will be described. The magnetic encoder 20 having this configuration is produced by integrally molding the multipolar magnet 2 on the annular portion 8 of the core metal 1 by insert-molding, and then filling the gap 21 between the core metal 1 and the multipolar magnet 2 with the sealing agent 11. When the multipolar magnet 2 is merely insert-molded on the annular portion 8 of the core metal 1, the slight gap 21 is formed between the multipolar magnet 2 and the core metal 1 due to mold shrinkage of the multipolar magnet 2, so that there is the possibility that the multipolar magnet 2 rattles due to the gap 21. If the multipolar magnet 2 moves even slightly, the magnetic accuracy deteriorates. Thus, by filling the gap 21 with the sealing agent 11, the core metal 1 and the multipolar magnet 2 are firmly fixed to each other to prevent rattle of the multipolar magnet 2. This can prevent the multipolar magnet 2 from deforming due to stress generated by expansion in a high-temperature environment or shrinkage in a low-temperature environment. In addition, rattle of the multipolar magnet 2 at the time of shrinkage at a low temperature does not occur. In other words, the magnetic encoder 20 having this configuration allows firm fixation by the simple method of insert-molding and filling with the sealing agent 11 even without bonding or caulking. Because of the firm fixation, it is possible to maintain high accuracy of rotation detection over a long period of time.

Since the multipolar magnet 2 is molded such that the end surface 6a of the outer diameter cylindrical portion 6 of the core metal 1 is embedded, it is possible to increase the radial length of the to-be-detected surface 2a of the multipolar magnet 2 as compared to the case where the end surface 6a is exposed, so that the magnetism detection range can be widen. It is possible to allow the multipolar magnet 2 to have the cross-sectional shape as described above because it is not necessary to perform, for example, a process of caulking the outer diameter cylindrical portion 6 of the core metal 1 as in the conventional art.

In the case of fixing the core metal 1 and the multipolar magnet 2 by using the sealing agent 11, it is possible to treat many products at one time as compared to conventional fixing by bonding, baking, caulking, or the like. Thus, the manufacturing cost can be reduced. In addition, since the sealing agent 11 having high flexibility is present in the gap between the core metal 1 and the multipolar magnet 2, the sealing agent 11 serves as a cushioning material, so that a load of thermal stress to the multipolar magnet 2 is reduced. In general, a multipolar magnet having a magnetic powder highly filled therein, such as a plastic magnet, tends to be inferior in fracture strength due to a small amount of a binder material such as resin, and thus it is difficult to use such a multipolar magnet in a magnetic encoder. However, since in the magnetic encoder 20 having this configuration a low load of thermal stress is applied to the multipolar magnet 2, it is possible to use, as the multipolar magnet 2, a plastic magnet or the like having a magnetic powder highly filled therein and having a high magnetic force.

In the embodiment, the multipolar magnet 2 is a plastic magnet in which a magnetic powder and a thermoplastic resin are mixed with each other. The plastic magnet having the magnetic powder highly filled therein can have a reduced coefficient of linear expansion, and thus it is possible to reduce the difference between the coefficient of linear expansion of the plastic magnet and the coefficient of linear expansion of a metallic material used for the core metal 1. Although the multipolar magnet 2 expands in a high-temperature environment and shrinks in a low-temperature environment, it is possible to reduce the differences in expansion amount and shrinkage amount between the multipolar magnet 2 and the core metal 1, since it is possible to reduce the difference between the coefficients of linear expansion of the multipolar magnet 2 and the core metal 1 as described. Therefore, it is possible to prevent an excessive load from being applied to the multipolar magnet 2 when the multipolar magnet 2 expands at a high temperature. In addition, rattle of the multipolar magnet 2 at the time of shrinkage thereof at a low temperature also becomes slight.

The thermoplastic resin in the multipolar magnet 2 may be made of a material including one or more compounds selected from the group consisting of polyamide 12, polyamide 612, polyamide 11, and polyphenylene sulfide. Accordingly, the water absorbency of the thermoplastic resin is decreased, so that it is possible to suppress a decrease in the magnetic properties of the multipolar magnet 2 as much as possible. Since the blending amounts of the magnetic powder and the thermoplastic resin which form the plastic magnet are adjusted such that the difference between the coefficient of linear expansion of the plastic magnet and the coefficient of linear expansion of the core metal 1 is equal to or less than 2.0×10⁻⁵, it is possible to use a plastic magnet having a magnetic powder highly filled therein and having a high magnetic force, as compared to a conventional product, so that it is possible to improve the surface magnetic flux density and further contribute to cost reduction.

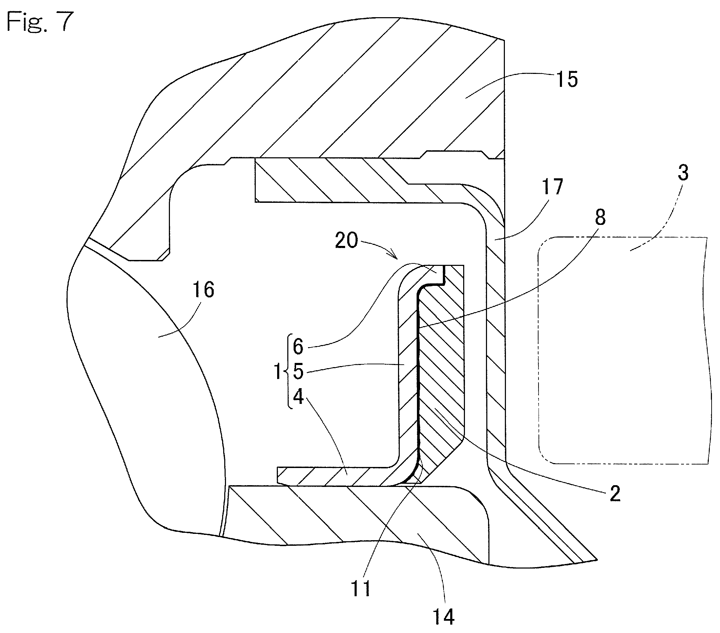

Fig. 7 is a longitudinal cross-sectional view of a main part of a wheel bearing device in which the magnetic encoder 20 is used. The wheel bearing device includes an inner member 14 which is the rotating member, an outer member 15 which is attached to a knuckle or the like, which is not shown, in a vehicle, and rolling elements 16 interposed between the inner member 14 and the outer member 15. In this example, balls are used as the rolling elements 16, but rollers may be used. The core metal 1 of the magnetic encoder 20 according to the embodiment is fitted in a press-fitted fashion to an outer peripheral surface of the inner member 14 at an inboard side which is a side close to the center in the width direction of the vehicle.

In this example, a protection cover 17 is press-fitted to an inner peripheral surface of the outer member 15 at the inboard side to close an opening of the outer member 15 at the inboard side. The protection cover 17 is capable of preventing leak of grease sealed in the bearing and is also capable of preventing muddy water, foreign matter, or the like from entering the bearing from the outside. As the protection cover 17, for example, a steel plate of a non-magnetic material which does not affect the sensing performance of the magnetic sensor 3 opposed to the multipolar magnet 2 of the magnetic encoder 20, for example, an austenite-based stainless steel plate, may be used. Instead of the protection cover 17, for example, a seal device (not shown) including a lip which is in slidable contact with the outer peripheral surface of the inner diameter cylindrical portion 4 and the inner surface of the upright plate portion 5 may be provided on the inner peripheral surface of the outer member 15.

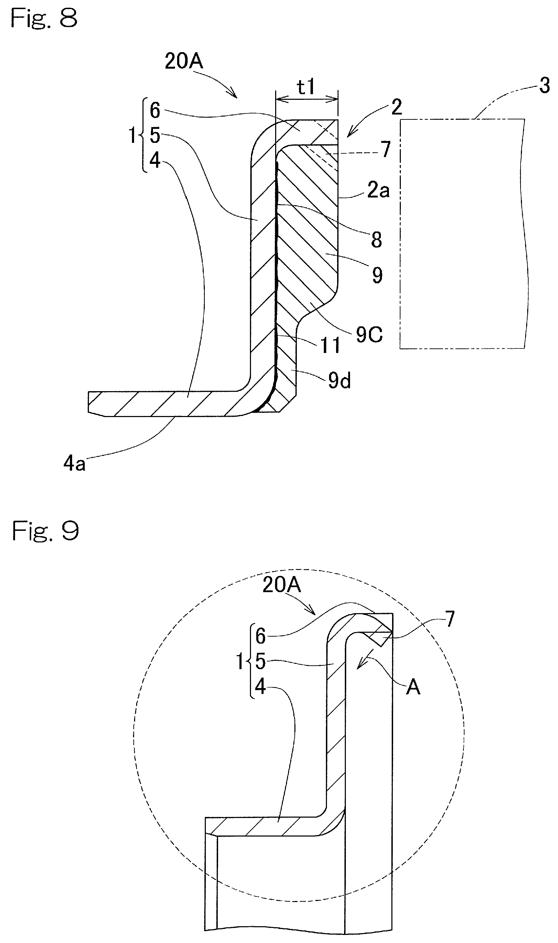

A magnetic encoder 20A according to a second embodiment of the present invention will be described with reference to Figs. 8 to 15. The following description also includes a description of a production method for the magnetic encoder. In the configuration of the second embodiment, parts that are the same as or correspond to those in the configuration of the preceding first embodiment are designated by the same reference numerals, and the detailed description thereof is omitted. The second embodiment is different from the first embodiment in that in addition to the sealing agent 11, a plurality of staking portions 7 which project toward the inner diameter side are provided at the outer diameter cylindrical portion 6 of the core metal 1, and the multipolar magnet 2 is integrally molded on the annular portion 8, made up of the upright plate portion 5 and the outer diameter cylindrical portion 6 of the core metal 1, by insert-molding such that the staking portions 7 are embedded.

As shown in Fig. 8, the magnetic encoder 20A includes an annular core metal 1 and a multipolar magnet 2 provided on the core metal 1. In the multipolar magnet 2, magnetic poles N and S are formed alternately in a circumferential direction. This magnetic encoder is attached to a rotating member which is not shown, and a magnetic sensor 3 is opposed to the multipolar magnet 2. In this state, the magnetic encoder is used for rotation detection. The multipolar magnet 2 shown in Fig. 8 is formed such that an axial thickness t1 thereof is larger than that of a conventional multipolar magnet. The multipolar magnet 2 includes a body portion 9 which is a thick portion at the outer diameter side, and a thin portion 9d which is connected to the inner diameter side of the body portion 9 via an inclined step portion 9c. The step portion 9c is formed in a cross-sectional shape which is inclined so as to come close to the upright plate portion 5 as extending toward the inner diameter side.

Fig. 9 is a longitudinal cross-sectional view of the core metal 1 of the magnetic encoder. The core metal 1 is formed of a metal steel plate of a magnetic material, in particular, a ferromagnetic material, for example, a ferrite-based stainless steel plate (SUS430 which complies with JIS), a cold rolled steel plate (SPCC which complies with JIS), or the like. The core metal 1 includes an inner diameter cylindrical portion 4 fitted to the rotating member, an upright plate portion 5 extending from one end of the inner diameter cylindrical portion 4 toward an outer diameter side, and an outer diameter cylindrical portion 6 extending axially from an outer diameter side end of the upright plate portion 5. The inner diameter cylindrical portion 4 extends from an inner diameter side end of the upright plate portion 5 toward one side in the axial direction, and the outer diameter cylindrical portion 6 extends from the outer diameter side end of the upright plate portion 5 toward the other side in the axial direction. The outer diameter cylindrical portion 6 in this example is formed such that the axial length thereof is shorter than the axial length of the inner diameter cylindrical portion 4.

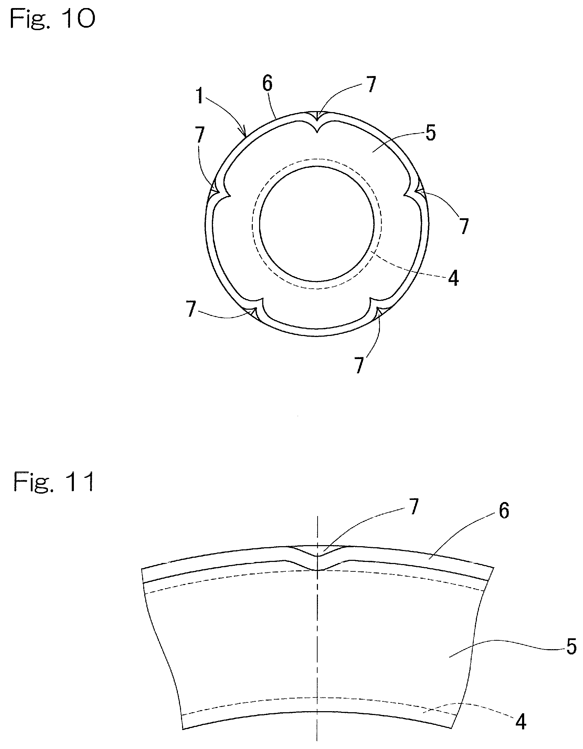

Fig. 10 is a front view of the core metal 1, and Fig. 11 is an enlarged view of a portion of Fig. 10. As shown in Figs. 10 and 11, the staking portions 7 which project toward the inner diameter side are provided, at a plurality of locations in the circumferential direction, on the outer diameter cylindrical portion 6. The staking portions 7 are arranged at equal intervals in the circumferential direction. The staking portions 7 are provided in order to fix the multipolar magnet 2 (Fig. 8) to the core metal 1 and to prevent the multipolar magnet 2 from coming off from and rotating relative to the core metal 1. Each staking portion 7 is formed by plastically deforming an axial end portion of the outer diameter cylindrical portion 6 such that the axial end portion projects toward the inner diameter side to have a substantially V shape in a front view. Since the staking portions 7 are provided only at the axial end portion of the outer diameter cylindrical portion 6, the multipolar magnet 2 formed in the following insert-molding step is locked by the staking portions 7 in the direction indicated by an arrow A in Fig. 9. Thus, as shown in Fig. 8, the multipolar magnet 2 can be prevented from undesirably coming off from the core metal 1 in the axial direction, and also can be prevented from rotating relative to the core metal 1.

In the second embodiment, after the staking portions 7 are provided, the multipolar magnet 2 is integrally molded on the annular portion 8, made up of the upright plate portion 5 and the outer diameter cylindrical portion 6 of the core metal 1, by insert-molding. After the insert-molding, the gap between the core metal 1 and the multipolar magnet 2 is filled with the sealing agent 11. Of the multipolar magnet 2 provided on the annular portion 8 of the core metal 1, a surface 2a confronting the magnetic sensor 3 continues from the axial end of the outer diameter cylindrical portion 6 so as to be flush therewith. The multipolar magnet 2 is formed such that the axial thickness t1 thereof is larger than that of the conventional multipolar magnet.

The thermal durability test will be described. In each of Examples 1 to 7 of a magnetic encoder in which only the staking portions 7 are provided and the sealing agent 11 is not used in the second embodiment and Comparative Examples 1 and 2 of a magnetic encoder having a conventional shape, ten magnetic encoders were prepared, and the thermal durability test was conducted under the same test conditions. After the thermal durability test was conducted in 500 cycles, presence/absence of cracking in the plastic magnet was confirmed. If even one of the ten magnetic encoders of each example had cracking, the example was determined as "x", that is, as having poor thermal durability. If none of the ten magnetic encoders of each example had cracking, the example was determined as "○", that is, as having good thermal durability. Also for the first embodiment in which the staking portions 7 are not provided and only the sealing agent 11 is used, similar test results were obtained.

**[Table]**

| [Test Results of Thermal Durability Test] | | | | | | |
|---|---|---|---|---|---|---|
| • Test conditions: -40°C/30 minutes ↔ +120°C/30 minutes was set as one cycle, and 500 cycles were executed. | | | | | | |
| | Core metal shape | Plastic magnet Coefficient of linear expansion ×10⁻⁵ | Core metal Coefficient of linear expansion ×10⁻⁵ | Difference in coefficient of linear expansion ×10⁻⁵ | Presence / absence of cracking | Determination |
| Example 1 | Present invention | 1.6 | 1.2 (SPCC) | +0.4 | Absence: 0/10 | ○ |
| Example 2 | " | 1.6 | 1.1 (SUS430) | +0.5 | Absence: 0/10 | ○ |
| Example 3 | " | 3.1 | 1.2 (SPCC) | +1.9 | Absence: 0/10 | ○ |
| Example 4 | " | 3.1 | 1.1 (SUS430) | +2.0 | Absence: 0/10 | ○ |
| Example 5 | " | 3.2 | 1.1 (SUS430) | +2.1 | Presence: 2/10 | × |
| Example 6 | " | 4.3 | 1.2 (SPCC) | +3.1 | Presence: 3/10 | × |
| Example 7 | " | 4.3 | 1.1 (SUS430) | +3.2 | Presence: 2/10 | × |
| Comparative Example 1 | Conventional shape | 3.1 | 1.2 (SPCC) | +1.9 | Presence: 7/10 | × |
| Comparative Example 2 | " | 3.1 | 1.1 (SUS430) | +2.0 | Presence: 9/10 | × |

From the test results, no cracking occurred in the examples in which the blending amounts of the magnetic powder and the thermoplastic resin of the plastic magnet were adjusted such that the difference between the coefficient of linear expansion of the plastic magnet and the coefficient of linear expansion of the core metal was equal to or less than 2.0×10⁻⁵.
(In Table 1, as data of the difference in coefficient of linear expansion, data of +2.1 is set for Example 5. Please confirm.)

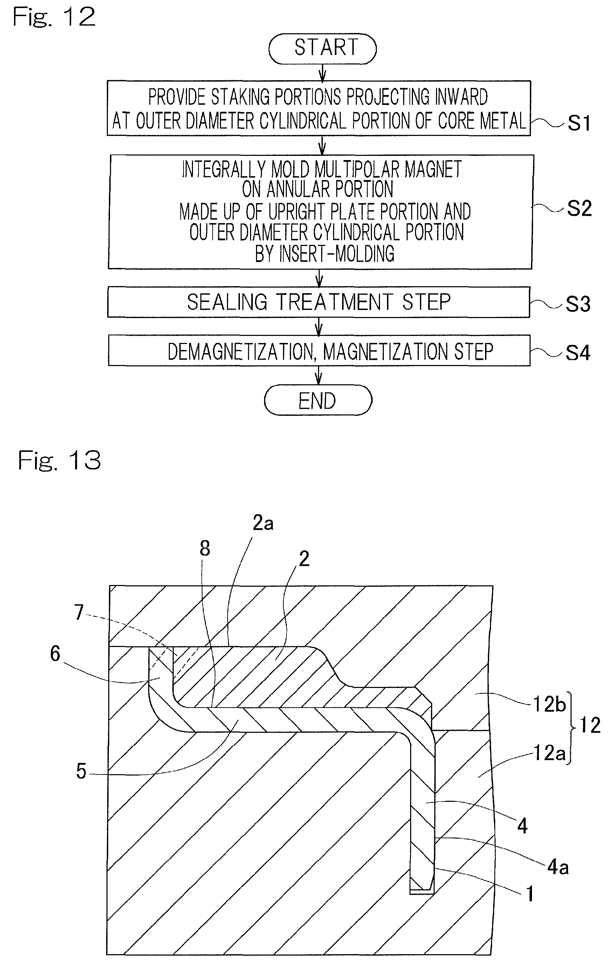

Fig. 12 is a flowchart schematically showing the production method for the magnetic encoder. A description will be given also with reference to Fig. 8. The production method for the magnetic encoder according to the embodiment includes a staking step (step S1), an insert-molding step (step S2), and a magnetization step (step S4). First, in the staking step, the aforementioned staking portions 7 are provided at a plurality of locations, in the circumferential direction, on the outer diameter cylindrical portion 6 of the core metal 1. The staking portions 7 may be provided simultaneously with providing the outer diameter cylindrical portion 6 of the core metal 1, or the outer diameter cylindrical portion 6 may be provided after the staking portions 7 are provided.

Next, in the insert-molding step, as shown in Fig. 13, the core metal 1 provided with the staking portions 7 is set within a cavity of an injection molding machine 12, and the multipolar magnet 2 is integrally molded on the annular portion 8 of the core metal 1 by insert-molding. The injection molding machine 12 includes, for example, first and second molds 12a and 12b which are used in combination with each other. The first mold 12a holds the core metal 1 while positioning the core metal 1. In a state where the first and second molds 12a and 12b are combined with each other, an annular cavity for molding the multipolar magnet 2 is formed. The injection molding machine 12 is formed with a gate (not shown) through which the materials of the multipolar magnet 2 are loaded into the cavity. Simultaneously with the above insert-molding, magnetic field press is performed while magnetic field orientation is conducted. Because of the magnetic field orientation at that time, an axially unipolar-magnetized state is obtained, but before taking out (after cooling within the molds), a reverse magnetic field is applied to perform a demagnetization treatment. When the demagnetization is insufficient, the insufficient demagnetization affects the accuracy of magnetic properties after magnetization. Thus, a complete demagnetization treatment may be performed in another step as necessary. After the magnetic field press is performed while the multipolar magnet 2 is integrally molded on the core metal 1, the first and second molds 12a and 12b are opened, and the multipolar magnet 2 and the core metal 1 are taken out therefrom.

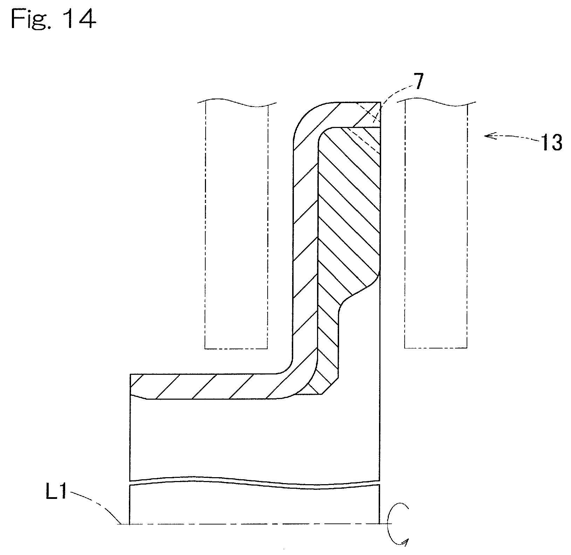

As a reference proposal example, as shown in Fig. 14, by a magnetic field press machine 13, the multipolar magnet 2 may be magnetized sequentially at desired circumferential pitches while being rotated about an axis L1 thereof. In that case, when an anisotropic magnetic powder is used for the plastic magnet, magnetic field press is performed while magnetic field orientation is performed, whereby a surface magnetic flux density after magnetization can be improved. Before magnetization, a complete demagnetization treatment step may be added. In this case, it is possible to reduce the difference between peaks of N poles and S poles after magnetization. In addition, a pattern of magnetic poles may be transferred by a magnetization yoke at one time.

Advantageous effects will be described.
(1) By combining the staking process with the insert-molding, the multipolar magnet 2 can be assuredly and easily fixed to the core metal 1. Only by insert-molding, fixing of the multipolar magnet is insufficient. However, by performing insert-molding such that the staking portions 7 which are provided to the core metal 1 beforehand are embedded, a part of the multipolar magnet 2 is locked by the staking portions 7, whereby coming-off and rotation of the multipolar magnet 2 can be easily prevented, and the multipolar magnet 2 can be firmly fixed to the core metal 1. In addition, since the staking is performed, the manufacturing cost can be reduced as compared to the case where conventional surface roughening or baking treatment is performed.
(2) In the case of conventional fixing only by caulking, in order to ensure fixing, it is necessary to perform caulking on both the inner peripheral surface and the outer peripheral surface of the multipolar magnet, and thus it is not possible to release expansion of the multipolar magnet. In the present embodiment, the staking portions 7 which project toward the inner diameter side are provided at the outer diameter cylindrical portion 6 of the core metal 1 along with insert-molding. Thus, the multipolar magnet 2 suffices to be locked only at the outer peripheral surface thereof, and is not locked at the inner peripheral surface thereof. Therefore, even when the multipolar magnet 2 expands in a high-temperature environment, it is possible to release the expansion to the inner diameter side of the multipolar magnet 2. Accordingly, the multipolar magnet 2 can be prevented from undesirably deforming, so that a decrease in the accuracy of rotation detection can be suppressed.
(3) The staking portions 7 are provided to the core metal 1 beforehand, and the multipolar magnet 2 is insert-molded. Thus, no residual stress occurs in the multipolar magnet 2, and it is possible to prevent an excessive load from being applied to the multipolar magnet 2 as in caulking.
(4) By the sealing treatment after the insert-molding, the multipolar magnet is further firmly fixed to the core metal.

The multipolar magnet 2 is a plastic magnet in which a magnetic powder and a thermoplastic resin are mixed with each other. The plastic magnet having the magnetic powder highly filled therein can have a reduced coefficient of linear expansion, and thus it is possible to reduce the difference between the coefficient of linear expansion of the plastic magnet and the coefficient of linear expansion of a metallic material used for the core metal 1. Although the multipolar magnet 2 expands in a high-temperature environment and shrinks in a low-temperature environment, it is possible to reduce the differences in expansion amount and shrinkage amount between the multipolar magnet 2 and the core metal 1, since it is possible to reduce the difference between the coefficients of linear expansion of the multipolar magnet 2 and the core metal 1 as described. Therefore, it is possible to prevent the multipolar magnet 2 from deforming due to an excessive load applied thereto when the multipolar magnet 2 expands at a high temperature. In addition, rattle of the multipolar magnet 2 at the time of shrinkage thereof at a low temperature also becomes slight.

Since the thermoplastic resin in the multipolar magnet 2 is a material including one or more compounds selected from the group consisting of polyamide 12, polyamide 612, polyamide 11, and polyphenylene sulfide, the water absorbency of the thermoplastic resin is decreased, so that it is possible to suppress a decrease in the magnetic properties of the multipolar magnet 2 as much as possible. Since the blending amounts of the magnetic powder and the thermoplastic resin which form the plastic magnet are adjusted such that the difference between the coefficient of linear expansion of the plastic magnet and the coefficient of linear expansion of the core metal 1 is equal to or less than 2.0×10⁻⁵, it is possible to use a plastic magnet having a magnetic powder highly filled therein and having a high magnetic force, as compared to a conventional product, so that it is possible to improve the surface magnetic flux density and further contribute to cost reduction.

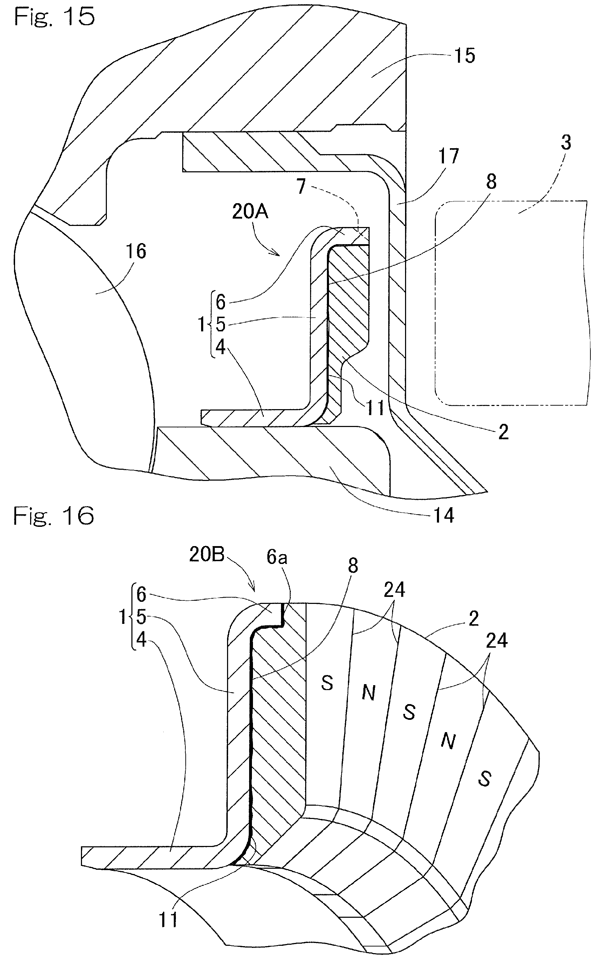

Fig. 15 is a longitudinal cross-sectional view of a portion of a wheel bearing device in which the magnetic encoder is used. The wheel bearing device includes an inner member 14 which is the rotating member, an outer member 15 which is attached to a knuckle or the like, which is not shown, in a vehicle, and rolling elements 16 interposed between the inner member 14 and the outer member 15. In this example, balls are used as the rolling elements 16, but rollers may be used. The core metal 1 of the magnetic encoder 20A according to the present embodiment is fitted in a press-fitted fashion to an outer peripheral surface of the inner member 14 at an inboard side which is a side close to the center in the width direction of the vehicle.

In this example, a protection cover 17 is press-fitted to an inner peripheral surface of the outer member 15 at the inboard side to close an opening of the outer member 15 at the inboard side. The protection cover 17 is able to prevent leak of grease sealed in the bearing and is also able to prevent muddy water, foreign matter, or the like from entering the bearing from the outside. As the protection cover 17, for example, a steel plate of a non-magnetic material which does not affect the sensing performance of the magnetic sensor 3 opposed to the multipolar magnet 2 of the magnetic encoder, for example, an austenite-based stainless steel plate, is used. Instead of the protection cover 17, for example, a seal device (not shown) including a lip which is in slidable contact with the outer peripheral surface of the inner diameter cylindrical portion 4 and the inner surface of the upright plate portion 5 may be provided on the inner peripheral surface of the outer member 15.

When the magnetic encoder 20A according to the second embodiment is applied to a wheel bearing device, coming-off and rotation of the multipolar magnet 2 can be easily prevented by the staking portions 7 which are provided to the core metal 1 beforehand. Thus, the manufacturing cost can be reduced as compared to the conventional art. In addition, since the multipolar magnet 2 is insert-molded on the core metal 1 provided with the staking portions 7, a problem that an excessive load is applied to the multipolar magnet as in caulking can be prevented. Since the multipolar magnet 2 is integrally molded on the annular portion 8, made up of the upright plate portion 5 and the outer diameter cylindrical portion 6 of the core metal 1, by insert-molding, even when the multipolar magnet 2 expands in a high-temperature environment, it is possible to release the expansion to the inner diameter side of the multipolar magnet 2. Accordingly, the multipolar magnet 2 can be prevented from undesirably deforming, so that a decrease in the accuracy of rotation detection can be suppressed.

Even when the sealing treatment is omitted in the second embodiment, some degree of effect is obtained regarding a point that it is possible to firmly fix the multipolar magnet and the core metal to each other at low cost without any problem occurring in the multipolar magnet, and a point that it is possible to maintain high accuracy of rotation detection over a long period of time, because of the presence of the staking portions 7.

A magnetic encoder 20B according to a third embodiment of the present invention will be described with reference to Figs. 16 to 20. The following description also includes a description of a production method for the magnetic encoder 20B. In the configuration of the third embodiment, parts that are the same as or correspond to those in the configurations of the preceding first and second embodiments are designated by the same reference numerals, and the detailed description thereof is omitted. The third embodiment is different from the first and second embodiments in that at boundaries between the magnetic poles S and N adjacent to each other in the multipolar magnet 2 in Fig. 16, a magnetic force reduction suppression section 24 which suppresses a magnetic force reduction due to canceling of magnetic fields between the magnetic poles S and N adjacent to each other is formed by molding the magnet material. Staking portions (not shown) are provided at the outer diameter cylindrical portion 6 as necessary. In addition, the gap between the core metal 1 and the multipolar magnet 2 is filled with a sealing agent 11. The multipolar magnet 2 may be a rubber magnet obtained by injection-molding a magnet material including a magnetic powder and a rubber.

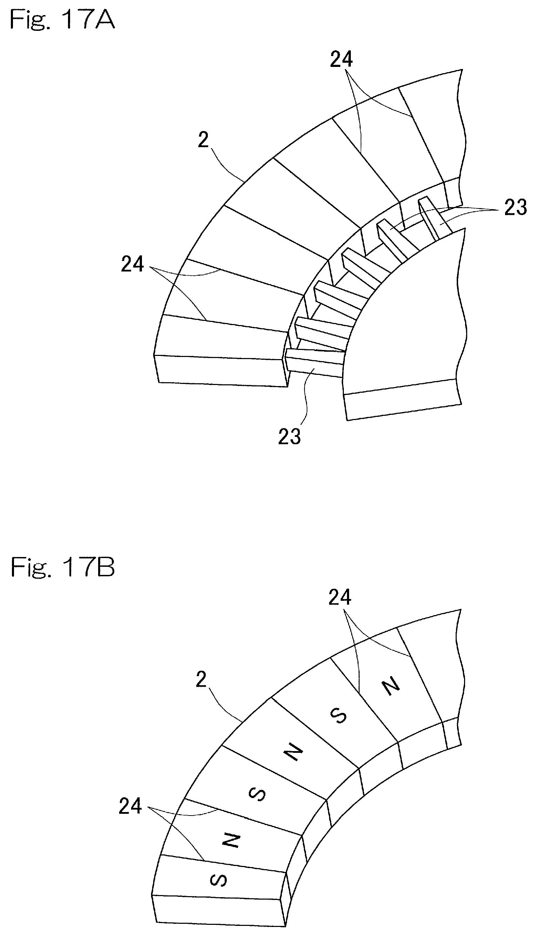

In the third embodiment, in insert-molding, for example, as shown in Fig. 17A, the magnet material is loaded into the cavity through gates 23 at locations corresponding to the respective magnetic poles S and N. Thus, the magnet material loaded through each gate 23 collides against each other at the boundary between a portion that is to be the magnetic pole S and a portion that is to be the magnetic pole N, to form a weld 24 at the boundary. Since the welds 24 are formed, when the multipolar magnet 2 is magnetized later, a magnetic force reduction due to canceling between the magnetic poles S and N adjacent to each other is suppressed. In other words, the weld 24 serves as the magnetic force reduction suppression section which suppresses a magnetic force reduction due to canceling between the magnetic poles S and N adjacent to each other. Thereafter, as shown in Fig. 17B, the gates 23 are removed, and magnetization is performed. In Figs. 17A and 17B and Figs. 18 to 20 described later, the multipolar magnet 2 is shown in a simplified shape.

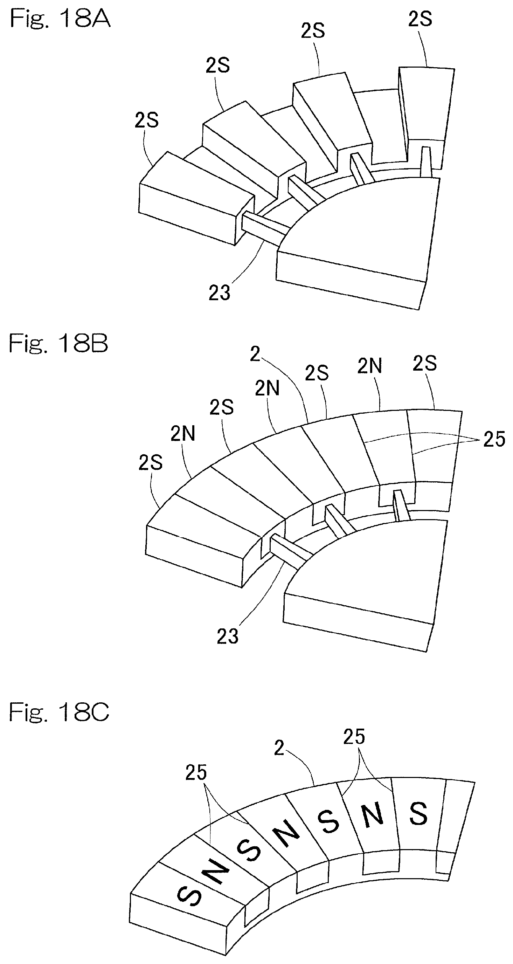

Instead of the insert-molding method in Figs. 17A and 17B, an insert-molding method may be executed in which as shown in Figs. 18A to 18C, the magnet material is loaded at a time interval between S pole portions 2S and N pole portions 2N at the respective magnetic poles S and N of the multipolar magnet 2, and the multipolar magnet 2 that has not been magnetized is molded. In the illustrated example, the S pole portions 2S are molded by loading for the first time (Fig. 18A), and the N pole portions 2N are molded by loading for the second time (Fig. 18B). When the magnet material is loaded at a time interval between the S pole portions 2S and the N pole portions 2N as described above, boundary layers 25 are formed at boundaries between magnetic pole portions to which the magnet material is loaded earlier and magnetic pole portions to which the magnet material is loaded later. Since the boundary layers 25 are formed, when the multipolar magnet 2 is magnetized later (Fig. 18C), a magnetic force reduction due to canceling between the magnetic poles S and N adjacent to each other is suppressed similarly to the case where the welds 24 are formed. In other words, the boundary layer 25 serves as the magnetic force reduction suppression section which suppresses a magnetic force reduction due to canceling between the magnetic poles S and N adjacent to each other.

In the insert-molding method in Figs. 18A to 18C, the types of the magnet material used for molding the S pole portions 2S and the magnet material used for molding the N pole portions 2N may be different from each other. When the types of the magnet materials are different from each other, the boundary layers 25 are more clearly formed, so that the effect of suppressing a magnetic force reduction is enhanced.

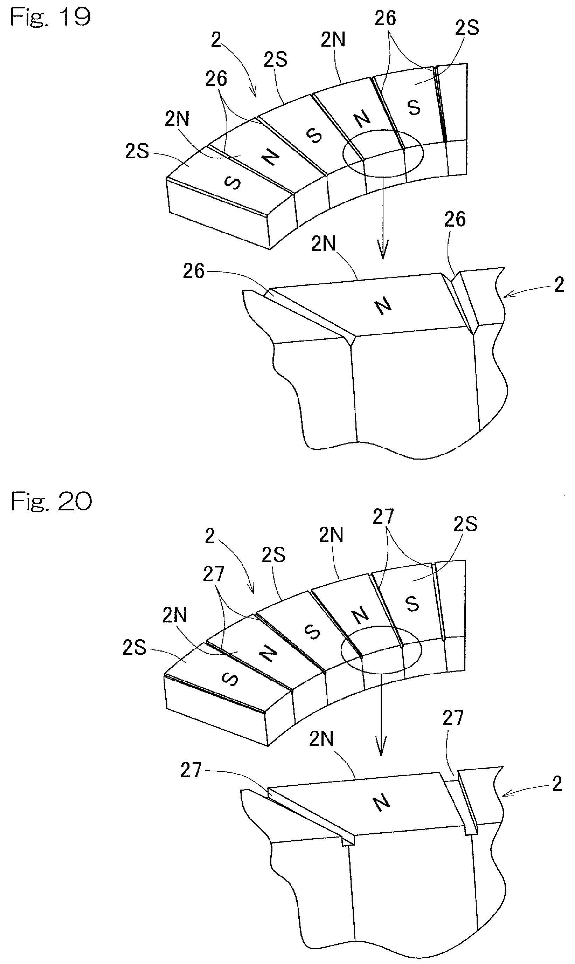

As shown in Figs. 19 and 20, grooves 26 and 27 which separate magnetized surfaces of the S pole portions 2S and magnetized surfaces of the N pole portions 2N at the respective magnetic poles S and N of the multipolar magnet 2 may be formed as the magnetic force reduction suppression section which suppresses a magnetic force reduction due to canceling between the magnetic poles S and N adjacent to each other. The grooves 26 in Fig. 19 are formed so as to have a V cross-sectional shape, and the grooves 27 in Fig. 20 are formed so as to have a rectangular cross-sectional shape, but the cross-sectional shapes of the grooves 26 and 27 are not particularly limited. In addition, it is possible to form the grooves 26 and 27 by insert-molding, but in some cases, the grooves 26 and 27 may be formed by cutting or the like after insert-molding.

Advantageous effects will be described. In the magnetic encoder 20B having this configuration, since the multipolar magnet 2 includes the magnetic force reduction suppression section 24, 25, 26, or 27 which suppresses a magnetic force reduction due to canceling between the magnetic poles S and N adjacent to each other, the above magnetic force reduction due to canceling is suppressed, so that it is possible to improve the surface magnetic flux density of the multipolar magnet 2. Thus, high accuracy of rotation detection is obtained, and it is possible to achieve higher magnetic encoding than that of a conventional product. Since the multipolar magnet 2 includes the magnetic force reduction suppression section 24, 25, 26, or 27, it is not necessary to increase the addition amount of the magnetic powder of the magnet material in order to improve the surface magnetic flux density, so that a reduction in the material strength of the multipolar magnet is suppressed. In addition, since the multipolar magnet 2 includes the magnetic force reduction suppression section 24, 25, 26, or 27, it is not necessary to add a rare earth-based magnetic powder, which is expensive, to the magnet material. Each of the magnetic force reduction suppression section 24, 25, 26, and 27 is formed by the form of the magnet material, does not require any material other than the magnet material, and can be formed by insert-molding. Thus, almost no increase in the manufacturing cost is caused.

The second embodiment shown in Figs. 8 to 15 includes the following mode 1 which does not include a sealing agent which is a requirement of the present invention.

### [Mode 1]

A magnetic encoder including a core metal and a multipolar magnet provided on the core metal and having magnetic poles formed alternately in a circumferential direction, wherein
the core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion,
a staking portion is provided at the outer diameter cylindrical portion so as to project toward an inner diameter side, and
the multipolar magnet is integrally molded on an annular portion, made up of the upright plate portion and the outer diameter cylindrical portion of the core metal, by insert-molding such that the staking portion is embedded.

The third embodiment shown in Figs. 16 to 20 includes the following mode 2 which does not include either one or both of a staking portion and a sealing agent.

### [Mode 2]

A magnetic encoder including an annular core metal and a multipolar magnet provided on the core metal and having magnetic poles S and N formed alternately in a circumferential direction, wherein
the multipolar magnet is integrally molded on the core metal by insert-molding of a magnet material, and
the multipolar magnet includes magnetic force reduction suppression section which is formed at a boundary between the magnetic poles S and N adjacent to each other by molding the magnet material and suppresses a magnetic force reduction due to canceling of magnetic fields between the magnetic poles S and N adjacent to each other.

Although the preferred embodiments have been described above with reference to the accompanying drawings, those skilled in the art will readily conceive various changes and modifications within the framework of obviousness upon the reading of the specification herein presented of the present invention. Accordingly, such changes and modifications are, unless they depart from the scope of the present invention as delivered from the claims, to be construed as included therein.

### [Reference Numerals]

1 Core metal
2 Multipolar magnet
4 Inner diameter cylindrical portion
5 Upright plate portion
6 Outer diameter cylindrical portion
6a End surface
7 Staking portion
8 Annular portion
11 Sealing agent
20 Magnetic encoder
21 Gap
23 Gate
24 Weld (Magnetic force reduction suppression section)
25 Boundary layer (Magnetic force reduction suppression section)
26,27 Groove (Magnetic force reduction suppression section)

## Claims

1. A magnetic encoder comprising a core metal and a multipolar magnet provided on the core metal and having magnetic poles formed alternately in a circumferential direction, wherein
the core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion, and
the multipolar magnet is integrally molded on an annular portion, made up of the upright plate portion and the outer diameter cylindrical portion of the core metal, by insert-molding such that an end surface of the outer diameter cylindrical portion is embedded, and a gap between the core metal and the multipolar magnet is filled with a sealing agent.

2. The magnetic encoder as claimed in claim 1, wherein the multipolar magnet is a plastic magnet in which a magnetic powder and a thermoplastic resin are mixed with each other.

3. The magnetic encoder as claimed in claim 1 or 2, wherein a magnetic powder is mixed in the multipolar magnet and the magnetic powder includes at least strontium ferrite.

4. The magnetic encoder as claimed in any one of claims 1 to 3, wherein the multipolar magnet includes a magnetic powder and a thermoplastic resin mixed with each other, and the thermoplastic resin includes one or more compounds selected from the group consisting of polyamide 12, polyamide 612, polyamide 11, and polyphenylene sulfide.

5. The magnetic encoder as claimed in any one of claims 1 to 4, wherein the sealing agent includes at least one compound selected from the group consisting of acrylate-based compounds, methacrylate-based compounds, and epoxy-based compounds.

6. The magnetic encoder as claimed in any one of claims 1 to 5, wherein the outer diameter cylindrical portion is provided with a staking portion projecting toward an inner diameter side, and
the multipolar magnet is integrally molded on the annular portion of the core metal by the insert-molding such that the staking portion is embedded.

7. The magnetic encoder as claimed in any one of claims 1 to 6, wherein the multipolar magnet is a plastic magnet in which a magnetic powder and a thermoplastic resin are mixed with each other, and blending amounts of the magnetic powder and the thermoplastic resin which form the plastic magnet are adjusted such that a difference between a coefficient of linear expansion of the multipolar magnet and a coefficient of linear expansion of the core metal is equal to or less than 2.0×10⁻⁵.

8. The magnetic encoder as claimed in any one of claims 1 to 7, wherein the multipolar magnet includes a magnetic force reduction suppression section that is formed at a boundary between the magnetic poles S and N adjacent to each other by molding a magnet material, and is configured to suppress a magnetic force reduction due to canceling of magnetic fields between the magnetic poles S and N adjacent to each other.

9. The magnetic encoder as claimed in claim 8, wherein the magnetic force reduction suppression section is in the form of a weld that is formed at the boundary between the magnetic poles S and N adjacent to each other by loading the magnet material through gates at locations corresponding to the respective magnetic poles S and N of the multipolar magnet to mold the multipolar magnet that has not been magnetized.

10. The magnetic encoder as claimed in claim 8, wherein the magnetic force reduction suppression section is in the form of a boundary layer that is formed at the boundary between the magnetic poles S and N adjacent to each other by loading the magnet material at a time interval between an S pole portion and an N pole portion at the respective magnetic poles S and N of the multipolar magnet and molding the multipolar magnet that has not been magnetized.

11. The magnetic encoder as claimed in claim 10, wherein types of a magnet material used for molding the S pole portion and a magnet material used for molding the N pole portion are different from each other.

12. The magnetic encoder as claimed in claim 8, wherein the magnetic force reduction suppression section is in the form of a groove that separates a magnetized surface of an S pole portion and a magnetized surface of an N pole portion of the respective magnetic poles S and N of the multipolar magnet.

13. A production method for a magnetic encoder including a core metal and a multipolar magnet provided on the core metal and having magnetic poles formed alternately in a circumferential direction, in which
the core metal includes an inner diameter cylindrical portion, an upright plate portion extending from one end of the inner diameter cylindrical portion toward an outer diameter side, and an outer diameter cylindrical portion extending axially from an outer diameter side end of the upright plate portion,
the production method comprising:
an insert-molding step of insert-molding the multipolar magnet on an annular portion, made up of the upright plate portion and the outer diameter cylindrical portion of the core metal, such that an end surface of the outer diameter cylindrical portion is embedded; and
a sealing treatment step of filling a gap between the core metal and the multipolar magnet with a sealing agent.

14. The production method for the magnetic encoder as claimed in claim 13, further comprising a staking step of providing a staking portion projecting toward an inner diameter side, at the outer diameter cylindrical portion prior to the insert-molding step, wherein
in the insert-molding step, the multipolar magnet is integrally molded by insert-molding such that the staking portion is embedded.

15. The production method for the magnetic encoder as claimed in claim 13 or 14, wherein
when insert-molding a magnet material on the core metal, a weld or a boundary layer that forms a magnetic force reduction suppression section configured to suppress a magnetic force reduction due to canceling of magnetic fields between the magnetic poles S and N adjacent to each other is formed at a boundary between the magnetic poles S and N adjacent to each other by loading the magnet material to individual portions which are to be the respective magnetic poles S or N.
